# EUROPEAN PATENT SPECIFICATION

(11) **EP 3 839 431 B1**
(45) Date of publication and mention of the grant of the patent: **04.09.2024**
(21) Application number: 19217975.2
(22) Date of filing: 19.12.2019
(51) Int. Cl.: G01C 15/00, G02B 5/126, G01C 15/06

(54) **SPHERICAL SURVEYING RETROREFLECTOR**
KUGELFÖRMIGER VERMESSUNGSRETROREFLEKTOR
RÉTRORÉFLECTEUR D'ARPENTAGE SPHÉRIQUE

(43) Date of publication of application: 23.06.2021
(73) Proprietor: Hexagon Technology Center GmbH, 9435 Heerbrugg (CH)
(72) Inventor: JENSEN, Thomas, 9400 Rorschach (CH); MÜLLER, Josef, 9413 Oberegg (CH); STIGWALL, Johan, 9008 St. Gallen (CH)
(74) Representative: Kaminski Harmann

(56) References cited:
- GB-A- 2 285 550
- JP-B2- 4 293 484

## Description

The present invention relates to a spherical retroreflector for surveying according to claim 1.

Geodetic instruments for surveying such as laser tracker or total stations are known in the art. Such surveying appliances for surveying spatial points on surfaces of a structure or object are particularly used for traditional terrestrial geodesy, surveying of buildings, measuring in construction works or manufacturing of automotive, aircraft, ships or the like. A geodetic measurement apparatus of the prior art is described, for example, in the publication document EP 1 686 350.

Spatial standard data recorded here are direction or angle and usually also a distance of a measuring system to a target point to be surveyed, and in particular the absolute position of the measuring system is captured in addition to any existing reference points. Therefore, such surveying instruments have electrosensory angle and possibly distance measurement functions, which permit the determination of a direction and distance to a selected target. The angle or distance variables are here ascertained within the internal reference system of the system and must still be linked, if appropriate, to an external reference system for absolute position determination.

For range finding, laser trackers or total stations have at least one distance meter, using a measurement beam, usually with a defined wavelength. In this case, a target point can be represented by a retroreflector which is targeted by the optical measurement beam generated by a beam source of the measuring device or of the measuring apparatus, in particular a laser beam. The laser beam is reflected back to the measuring apparatus in a parallel fashion, the reflected beam being detected by detection means of the apparatus.

In this case, an emission direction and respectively a reception direction of the beam are ascertained, for example by means of sensors for angle measurement which are assigned to a deflection mirror or a targeting unit of the system. In addition, with the detection of the beam, a distance from the measuring apparatus to the target point is ascertained, e.g. by means of time-of-flight or phase difference measurement or by means of the Fizeau principle. The position coordinates of the target point are determined on the basis of the emission direction and respectively the reception direction and the distance.

As said, target points are surveyed by placing specifically embodied target objects, for example surveying poles, at the target point. Said target objects usually comprise a plumb pole with a retroreflector for defining the measurement section or the measurement point. By interaction of an above-mentioned measurement system with a retroreflector that is used in each case - reflecting the incoming electronic distance measuring (EDM) signal towards the instruments EDM receiver optics-, it is possible to reliably and precisely determine the position of said reflector and thus the point to be measured. JP 4293484B2 relates to a light reflection device used with a surveying instrument. The light reflection device combines a convex reflector and a directional flat reflector. GB 2285550A relates to an optical coordinate measuring system for large objects. An object to be measured is touched with a probe on which two retroreflectors are mounted.

In addition, modern surveying instruments provide means for automatic target finding or tracking, such as active target recognition (ATR). This allows to automatically determine the exact lateral position of a retroreflector relative to the pointing direction of the measuring device. Such ATR-units use for example a separate IR-Laser or illumination means such as IR-LEDS as measuring light which is retroreflected by the retroreflector and detected e.g. by a position sensitive image sensor of the surveying instrument.

Usually for purposes of geodetic measuring, the tip of a plumb rod with the retroreflector is brought into contact with the target point on the ground or object and held perpendicular to determine the direction. In so doing, in order to determine the distance, the rod will be aligned horizontally. If standard retroreflectors are used, the rod has to be rotated about its vertical axis in such a way that it is aligned with the surveying instrument's line of sight such that the surveying beam aims at the retroreflecting element, e.g. a glass prism, and the prism reflects the light emitted by the surveying device back in the direction of the latter. When pointing to such a standard prism that is not perpendicular to the line of sight of the instrument, it is not easily possible to point to the actual prism center. This is a result of the refractive index between air and glass being different, thus adding possible further error in the measurement of the horizontal direction.

As an alternative to such single directional retroreflectors with limited angular acceptance range, use is made of 360° reflectors, which reflect light signals back from any horizontal alignment. Therefore, a vertical alignment as described above is not necessary. 360-degree retroreflectors, which reflect measurement signals from all directions, are particularly useful for terrestrial surveying with state of the art robotic total stations which utilize automated target recognition (ATR) and automated lock technology. This allows a higher level of convenience for the operator at the pole by avoiding the need to constantly align the prism to the instrument.

Such omnidirectional retroreflectors usually comprise prisms arranged in different geometries and a couple of different sizes. They comprise six individual prisms, glued together to form a ring and cover all directions. Due to the switching between the different, e.g. six, prisms when the direction of the impinging beam changes or the retroreflector rotates, there are disadvantageously significant systematic shifts which are responsible for significant accuracy uncertainties or measurement errors. Said otherwise, the transit of the reflection from one prism to the next, e.g. in case of rotation of the reflector about its yaw-axis, causes the reflected spot on the detector to slowly shift up or down as well as left or right. As another disadvantage, these 360°-prism have a limited acceptance angle with respect to their pitch axis. Other types of reflectors are embodied for example as segmented cat eyes. Their disadvantages are amongst others limited measuring precision, a jitter in position if rotated about the pitch axis and the existence of multi-spots. Still other types such as a reflective foil have disadvantageously limited precision and the need for readjustment with respect to yaw and pitch axis.

As another 360-degree retroreflector, spherical retroreflectors are in principle known in the art which "naturally" provide for a 360° angular acceptance range both in horizontal and vertical respect. Instead of a plurality of prism, they comprise a transparent sphere. The incoming measurement light is focused on the back surface of the sphere, reflected back the same way by the Fresnel reflection from the glass-air interface and is recollimated to create a "Cat-Eye"-type retroreflection. Thanks to perfect symmetry, there are no systematic shifts when rotating the sphere. As another advantage, disturbance by reflection at the front side (thus affecting a smaller target distance) is reduced compared to reflective prisms. With zero systematic errors it is theoretically possible to reach an exceptional accuracy (<< 100 um) with a spherical retroreflector.

However, compared to a prism, the reflection of such a sphere is weaker since the effective area of reflection is much smaller, and the retroreflectivity from the back surface is for example only 11% for a sphere with a refractive index of 2. Since the range and/or accuracy of distance measurements is highly dependent on the energy available from the returned laser beam, this results in a reduced measurement distance range and/or measurement accuracy.

The problem is further increased in case of strong ambient light as this worsens the signal-to-noise-ratio (SNR). This is particularly the case for outdoor surveying tasks due to direct solar irradiation. The sun creates a focus of itself on the front hemisphere of the sphere if impinging from the back side (the front side being the side of the sphere facing the geodetic measuring instrument). Another form of sun spot is specular reflection when the sun instead is behind the surveying instrument (instrument in between sun and surveying sphere) and is reflected on the first surface of the sphere. This sun reflection is less intense than the back-side-sun-spot, but nevertheless is a factor of disturbance.

Such a sun spot is then also imaged on the sensor of the surveying instrument and overlaps with the surveying light spot. Only at short distances and with a sufficient high sun elevation angle, the sun spot can be distinguished from the imaged retro-reflection of the measurement beam; even then, a sun spot may be mistaken as the retroreflected measurement light.

Particularly a completely unsolved problem is that at longer distances, it is no longer possible to resolve the sun spot from the measurement spot and one must rely on difference images to subtract the sun. It is known to use difference images on side of the surveying instrument resp. its image sensor in order to separate the measurement signal from the background. In order to form difference images, the images obviously must not be overexposed. This limits the exposure time due to the bright sun-spot.

In case of fast air turbulence, the sun spot moves slightly between two images, giving rise to artefacts in the difference image. In order to reduce the magnitude of such artefacts, it may be necessary to average a few images. At longer measurement distances, the sun spot is not any more separable from the reflection spot and it is difficult to say if the difference image is showing mainly the retro-reflection spot or sun-spot artefacts due to air turbulence, e.g. heat shimmer. Especially when using high magnification lenses (such as total station telescopes) heat shimmer artefacts are very visible, even on days when the sun is not heating the ground exceptionally strong.

In short, due to this disadvantages resp. limiting factors, in fact known spherical retroreflectors for geodetic measurements with e.g. total stations or laser trackers are not suitable for outdoor surveying or at medium to large distances (more than a few meters) or situations where there is no or no more than weak direct ambient light.

It is therefore an object of the invention to provide an improved spherical retroreflector.

This object is achieved by the realization of the characterizing features of the independent claims. Features that develop the invention in an alternative or advantageous manner can be gathered from the dependent patent claims and also the description including the descriptions of figures. All embodiments of the invention that are illustrated or disclosed in some other way in this document can be combined with one another, unless expressly stated otherwise.

The invention relates to a surveying spherical retroreflector for retroreflection of incoming surveying light such as a measuring laser beam or surveying target illumination light. The retroreflector comprises a transparent retroreflective sphere with a defined equatorial plane.

Preferably, the sphere has a diameter of at least 17m or 24mm, particularly at least 30mm, specifically 34mm. As another preferred option, the sphere's refractive index is (substantially) 2 or is a varying refractive index, in particular a stepped refractive index or a gradient refractive index (refractive index with respect to the (central) wavelength of the surveying light). Such glass types are known as H-ZLAF92 (CDGM, China) or S-LAH79 (Ohara, Japan). As another option, the refractive index is adapted to the measuring light used by a surveying instrument.

The retroreflector comprises a light shielding designed as shielding of the sphere against direct ambient irradiation, in particular solar irradiation.

In other words, the retroreflector has an ambient light shielding that reduces or prevents disturbance of measurement by environmental light directly impinging on the retroreflector. Such disturbing light arises for example from spotlights, reflecting surfaces such as mirrors or particularly from sun light.

Preferably, the shielding in designed for protection against low elevation ambient irradiation i.e. light which impinges with a relatively small angle with respect to the sphere's equatorial plane or the direction of the surveying light. For example, the shielding shields from ambient light beams impinging with an incidence angle of maximal 60° with respect to the equatorial plane resp. the horizontal. Therefore, the shielding comprises a side shielding, i.e. at least part of the shielding covers the area at or around the equator of the sphere or the northern hemisphere (complete northern hemisphere or part of it, e.g. 180° or 120° about the north-south axis) besides the "polar cap". In addition, the shielding may comprise a separate top shielding (hat) for shielding against high elevation ambient radiation.

Optionally, the side shielding extends 360° around the north-south-axis of the sphere. That means, that its effect does not depend on its "horizontal" orientation towards the surveying instrument which facilitates handling of the retroreflector or makes the shielding effect independent of the (horizontal) position of the geodetic instrument relative to the retroreflector.

As another option, the shielding is at least partly retractable. Alternatively or additionally, at least part of the shielding is rotatable about at least one axis of the sphere, preferably 360° about the north-south-axis of the sphere. That means that the effective size of the shielding is adaptable and/or its position relative to the sphere can be changed.

Such a retraction and/or rotation is optionally effected automatically, in particular dependent on a detection of direct ambient light and/or of the surveying light. That means that the shielding is automatically adapted to the surveying situation by altering the position and/or effective size of the shielding area. For example, if no direct ambient light is detected (or at least no direct light with an impinging direction which could disturb the measurement), the shielding is minimized, e.g. such that the complete "naked" sphere can be used for surveying. Or if no surveying light is detected, this could mean that it is unintentionally blocked by the shielding, the position of the shielding is automatically changed. Or as another example, the surveying is started with retracted shielding and if light is detected on a surveying's instrument detector even without any surveying light, meaning that direct ambient light is the source of the measurement signal and not the wanted retroreflection, the shielding is automatically extended.

In embodiments with a side shielding as described above, preferably it is the side shielding which is fully retractable and/or freely rotatable 360° around the north-south-axis of the sphere.

As another option, the shielding is fixed relative to the sphere and the sphere (together with the shielding) can be moved (relative to a support) in that the sphere is rotatable about at least one axis, in particular about two axes perpendicular to each other.

Preferably, the shielding is rotation invariant with regard to an orientation of the sphere with respect to at least one axis of rotation, in particular with respect to a vertical axis or with respect to all three axis of rotation. That is that for example independent of the vertical alignment of the sphere or even independent of the sphere's 3-DoF rotational orientation, the shielding effect is the same.

In an embodiment, the side shielding is embodied as a hollow structure, preferably half-cylinder, running substantially around a north-to-south hemisphere of the sphere.

In another embodiment, the shielding, in particular said side shielding, comprises a structure limiting the angular acceptance range of impinging light beams. That means that only light arriving within a certain angular range reach the sphere, the other light is blocked.

For example, such a structure is embodied as a plurality of discrete fins running circumferentially around the sphere, preferably radial fins spaced equally apart to another, and perpendicular to the equatorial plane or perpendicular to the center point of the sphere, e.g. running from a top side of the sphere to its bottom side along the lines of longitude.

As another example, the structure is embodied as structured film or sheet, in particular arranged as a hollow cylinder coaxial to the north-south-axis of the sphere.

As still another example, the structure comprises a plurality of holes running circumferentially around the sphere, wherein the holes are pointing towards the sphere's center and the relation of hole diameter to the hole length defines the acceptance angle.

Optionally, the structure is modifiable in such a way that the angular acceptance range can be varied, for example by a change of the distance between said fins and/or their positioning angle.

As another option, the shielding, preferably said side shielding, comprises a reflective coating. The reflectivity of said coating is optionally in between 25% and 45%, in particular in between 33% and 38%, specifically the reflectivity is 33%. This coating increases the strength of the retroreflected signal as well as the front side (specular) sun-spot and reduces the strength of the back-side sun spot. Thus, the signal-to-background ratio is improved.

Alternatively, the reflective coating extends 180° at most around the north-south-axis of the sphere, in particular covers a north-to-south hemisphere, and has a near-total-reflectivity. Such a coating is for example embodied as a metal coating. In embodiments with a rotatable sphere as described above, the sphere having said reflective coating is optionally rotated around the north-south axis at a constant rate, thus "chopping" an incoming surveying beam and creating a modulated retroreflected signal which can be used for surveying light identification. The rotatable reflector can optionally also be used to track the surveying beam using a closed loop control system based on the reflected signal strength.

As another option the shielding, in particular said side shielding, comprises a band-pass light filter coating adapted to the wavelength of the measuring beam. This band-pass filter might also be applied on the receiving camera lens side of the surveying instrument. The band-pass filter can be based on a dielectric coating and/or a combination of absorbing filter materials to select a higher transmission only in the desired spectral range. Also a doping of the glass material is an option (e.g. like a red rubin sphere) to reduce the observable spectral range.

The present invention provides the advantage of a spherical retroreflector particularly suitable for outdoor surveying even in conditions with direct ambient light, particularly low elevation direct ambient light which would otherwise produce a strong light signal on the sphere's front facing the surveying instrument and thus on the instrument's measuring sensor. Due to the light shielding, such direct ambient light does not interfere with the measurement or at least only to such a reduced level that it can be well separated from the measurement signal resp. that the SNR is sufficiently high. The different embodiments provide such direct ambient light shielding for different retroreflector types or surveying conditions or demands.

In preferred embodiments, the "natural" 360°-usability of a spherical reflector is advantageously not reduced or destroyed by the shielding but maintained i.e. the shielding is rotation invariant at least with respect to the horizontal or for rotation about the north-south axis of the sphere.

Thus, an all-around usability of an outdoor spherical reflector in combination with protection against ambient sun light in at least every horizontal position is advantageously provided. This is achieved either in that the shielding extends over 360° (at least horizontally). Or in that the (effective) size and/or position of the shielding is changeable and thus -preferably automatically- adapts to the surveying direction or the measurement conditions. At least, the shielding is designed such that the 360°-usability is only restricted if necessary in view of the presence of direct ambient light, e.g. in that the shielding is only effected if there is indeed direct sun light or more particularly if there is low elevation sun light.

The spherical retroreflector according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention.

Specifically,
- figures 1a-c: illustrate examples of transparent spheres for retro-reflection of incoming surveying light and the effect of direct environmental light;
- figures 2a,b: illustrate the disturbing effect or influence of direct ambient light;
- figures 3a,b: illustrate a first example of a surveying spherical retroreflector with a light shielding;
- figures 4a,b: depicts another example of a retroreflector comprising a light shielding;
- figures 5a-c: illustrate an example of retroreflector with an ambient light shielding limiting the angular acceptance range;
- figures 6a,b: illustrate another embodiment of a retroreflector with a shielding limiting the angular acceptance range;
- figure 7: illustrates another embodiment of a retroreflector with a shielding limiting the angular acceptance range;
- figures 8a,b: illustrate another example of a shielding against direct ambient light; and
- figures 9a,b: illustrate still another example of a shielding against direct ambient light.

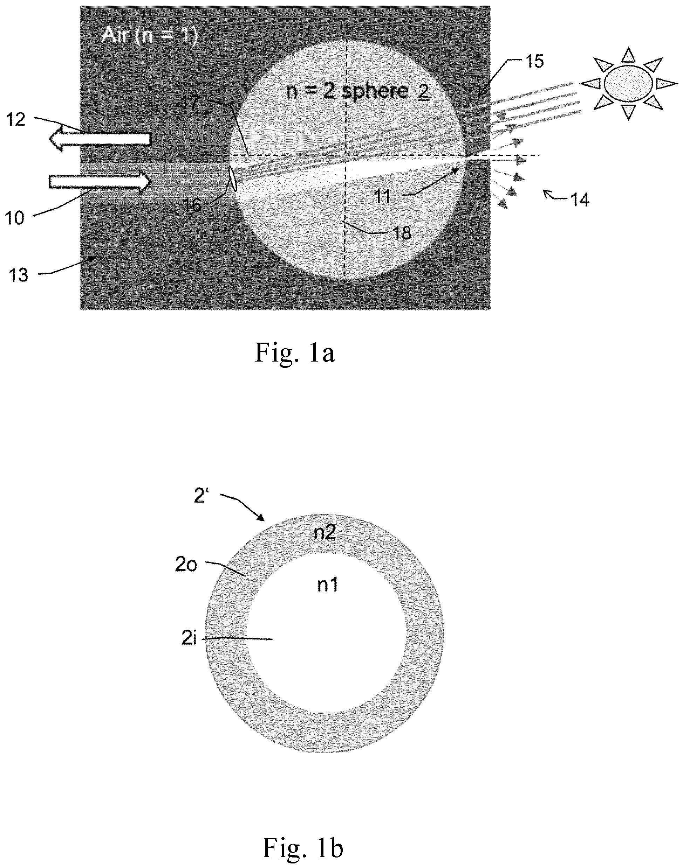

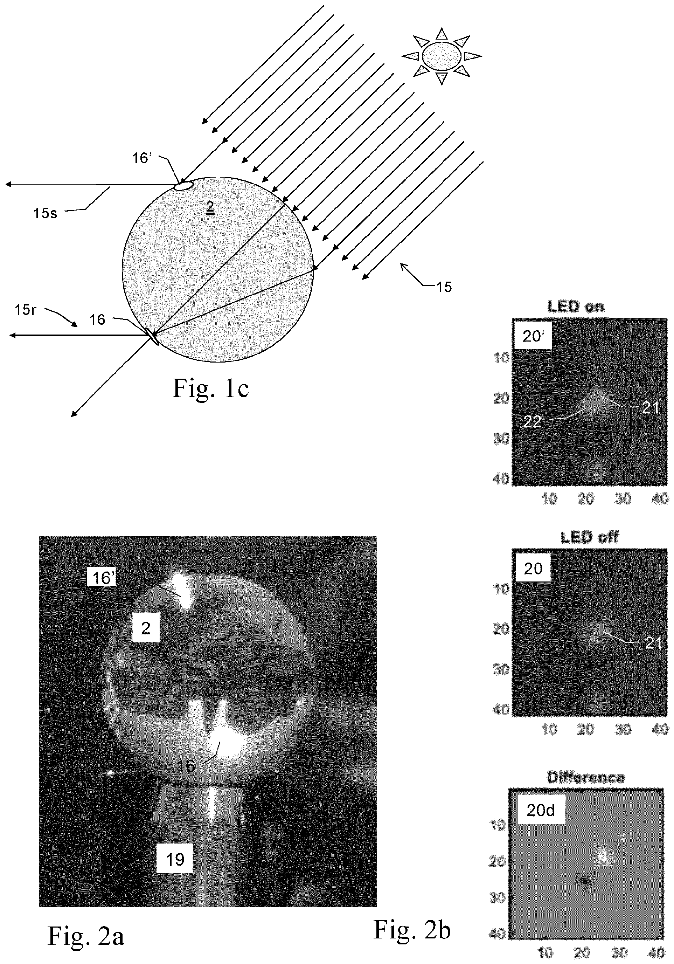

Figures 1a, 1b and 1c illustrate examples of transparent spheres 2, 2' used for retro-reflection of an incoming surveying or measuring light 10, e.g. laser beam or narrow-angle LED-light emitted by a terrestrial geodetic instrument such as a total station or laser tracker.

Figure 1a shows a transparent sphere 2 together wherein in addition the equatorial plane 17 and its north-to-south or vertical axis 18 are indicated. The equator or north-south axis are normally defined by the intended orientation of sphere 2 for surveying operation resp. by fixation to a support such as a measuring pole as shown in figure 2a or 3a-4b. The equator is also normally in the horizontal plane since the pole must be held perfectly vertical in order to accurately offset the measurement point from the center of the sphere to the tip of the pole.

The sphere 2 is homogeneous with a refractive index of (substantially) 2. Besides specular reflection 13 of incoming surveying light (such as a measuring laser beam), the incoming light 10 is focused on the back surface 11, reflected back by the Fresnel reflection from the glass-air interface and is recollimated to create a "Cat-Eye"-type retroreflection (outgoing light beam 12).

In such exemplary spheres, due to dispersion of the so far known optical materials, the sphere 2 only works in a limited spectral range with a peak dependent on the material glass type, e.g. a peak for red visible light for n=2 glass, with a tail into IR but an abrupt drop towards shorter wavelengths. At "longer" red and infrared, the reflection comes from a ring around the center of the sphere where spherical aberrations compensate for the deviation from n = 2.0.

Such a retroreflection can be obtained quite similiary with alternative sphere 2' shown in figure 1b which has a stepped refractive index instead of the unvarying one of sphere 2. In the example, the sphere 2' consists of an inner sphere 2i of a material with a first refractive index n1 and an outer shell 2o with a second refractive index n2. For instance, the first refractive index n1 is 1.8 and the second refractive index 1.5. Preferably, the coefficients of thermal expansion of inner and outer sphere are at least nearly equal to avoid tension due to temperature change.

As another alternative (not shown), the sphere used for retroreflection has a gradient refractive index, e.g. growing steadily or at least quasi-continuously from the outer, starting with an index of e.g. 1.3 on the outside and growing towards the center with the end value of e.g. 2, whereby the end value can depend on the gradient index profile.

Compared to a prism, the reflection of transparent spheres 2 or 2' is weaker since the effective area of reflection due to spherical aberrations is much smaller, the reflectivity from the back surface is only 11% in case of sphere 2 (the main part of the incoming light leaves the sphere 2 out of its back side, as indicated by arrows 14), spherical aberrations causing wavefront distortion on the back propagating beam. Theoretically, with zero systematic errors it is nevertheless possible to reach an exceptional accuracy (<< 100 um) with this type of reflector.

However, this accuracy is severally reduced in practice, particularly the longer the measurement distance and the more there is ambient light directly impinging on the sphere 2. This is merely the case in outdoor surveying, where ranges of up to hundred meters or more and sun light are custom.

As one improvement, the diameter of sphere 2 or 2' is chosen relatively large. Preferably, the sphere's diameter is at least 17mm, 24mm, 30mm or 34mm. A large sphere 2 increases the measurement signal as well as the separation between retroreflection 12 and an ambient light spot 16 (cf. below). Mechanically, a larger sphere 2 may also be more practical. With a 24 mm sphere, the signal strength would be doubled, 30 mm tripled and 34 mm quadrupled compared to a 17mm sphere. Whereas with a larger sphere 2 the transmitted "sun spot" 16 will also be larger -so the balance between signal and sun will be the same though the overlap between sun focus spot 16 and measuring light retroreflection is reduced-, however the contrast relative to the background ("white wall") is improved and the exposure time will be reduced at larger surveying distances.

Ambient light such as sun beam 15 is in particular disturbing if -as indicated in figure 1a- impinging on the back side of the sphere 2 (thus near the reflection spot 11) with low elevation, i.e. a small incident angle in relation to the equatorial plane 17 of the sphere 2 resp. to the surveying direction or axis of the surveying light (direction of arrow 10), e.g. an incident angle of maximal 60° or maximal 50°. The sun light 15 impinging on the back hemisphere leads to a bright spot 16 (generating stray light on the sphere surface) on the front side near the exit place of the surveying light 12, a problem which is unknown to 360°-prism retroreflectors as direct ambient light from the "back" is simply retroreflected to the back side and not "forwarded" to the front side.

Then, both the retroreflected light beam 12 as well as the sun spot 16 are imaged on an optical sensor of a geodetic instrument, e.g. a total station or laser tracker, with which an object point is to be surveyed with help of retroreflective sphere 2. As the position of both the retroreflected measuring beam 12 and the sun beam 15 focused on the front hemisphere is at least nearly equal, their positions on the optical sensor is nearly equal, too. Thus, the surveying instrument is unable to identify the greatly disturbed measurement beam 12 resp. determine its position on the sensor, and the surveying accuracy (of the location of the sphere 2 to be measured) is severely diminished.

Figure 1c is another illustration of disturbing effects of ambient (sun) light). The figure shows the refractive sun spot 16 created by back side sun light 15 as described above.

Part of the light 15r of his sub spot 16 goes "horizontally" in direction to the surveying instrument while another part is strayed in other directions.

In addition, part of the ambient sun light 15 is reflected at the top of sphere 2 in direction to the surveying instrument (light beam 15s). Thus, there is not only the first sun spot 16 but a second sun spot 16' is present in the surveying instrument's image of sphere 2 resp. on its image sensor. This specular sun spot 16' is another disturbance of the surveying.

Figures 2a, 2b illustrate further the disturbing effect or influence of direct sun light.

Figure 2a is a photo of a transparent retroreflective sphere 2 mounted on a surveying pole 19, positioned outdoor with the sun shining from behind the sphere 2. As can be seen, this direct ambient light leads to a first (refractive) light spot 16 on the front side of the sphere 2 and a second (specular) light spot 16' both of which disturb the measurement. In other words, in outdoor application the rear focus creates very bright spots 16 and 16' when the sun is on the opposite side of the sphere 2.

Figure 2b illustrate the effect of such direct ambient light on the surveying image sensor and hence the measurement signal or surveying image 20, particularly for ambient light impinging with a low elevation such as 45° or below and for long measurement range such as 50m or more.

In the middle part of figure 2b, there is shown an image 20 generated by an image sensor when there is no surveying light or target sphere illumination (LED off). Because of the present ambient light focused on the front hemisphere, there is a light spot 21 present on the image 20.

In the upper part of figure 2b, there is shown an image 20' of the image sensor when the sphere is illuminated by surveying light or by an own illumination source (LED on) in addition to the present direct ambient light. The surveying light leads to a further light spot 22. However, this surveying light spot 22 is hardly distinguishable from the light spot 18 from the ambient light spot 21 even in case of a differential image 20d (image 21 subtracted from image 22) as shown at the bottom of figure 2b, too. The signal-to-noise ratio is rather low and the measurement error accordingly high. The position of the retroreflector resp. of the target point can only be determined with low accuracy if at all.

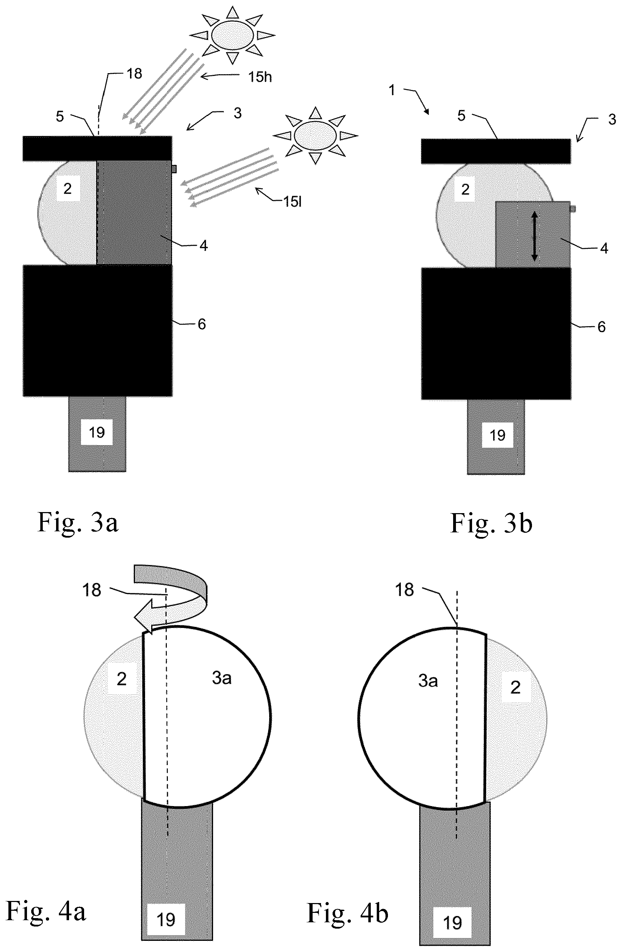

Figures 3a and 3b illustrate a first example of a surveying spherical retroreflector 1 according to the invention. The retroreflector 1 comprises a retroreflective sphere 2 as described above. The sphere 2 is mounted to a surveying rod 19. Further, the retroreflector 1 comprises a light shielding 3. The light shielding 3 is designed such that it protects the sphere 2 against direct ambient light and by having a special side shielding 4 specifically against direct ambient light impinging with low elevation ("from the side").

Therefore, the shielding 3 in the example comprises a side shielding 4 which is embodied as a hollow half cylinder, mounted to a support 6 on pole 19. The axis of half cylinder 4 coincidences with the horizontal axis 18 of sphere 2. The half cylinder 4 extends (nearly) over the whole diameter of the sphere 2 and thus protects the sphere from incoming low elevation direct ambient light 15l. Instead of running over 180°, it may be sufficient protection against side light to mount a cylinder of e.g. 150° which enables a larger surveying window (acceptance angle for the surveying beam).

Thus, the retroreflector 1 comprises a side sun shade 4 which protects the back hemisphere ("back" with respect to the orientation to the surveying instrument) from ambient light 15l. As no (direct) ambient sun light impinges on the back side of sphere 2, no sun spot as described in figures 1a and 2a,b is present which could superimpose with the retroreflected light and disturb the surveying.

In addition to said side shielding 4, the shielding 3 in the example comprise a top shielding 5. The shielding "hat" blocks sun rays 15h at high elevation and in addition blocks specular reflections (as described with respect to figure 1c). Depending on the required pitch range of the reflector 1, this hat 5 can be made larger to block a larger range of sun elevations. In addition in the example, it is designed to serve as protection against mechanical interference, e.g. impacts, wherefore the top shielding 5 is made from a hard material or relatively thick.

As another option depicted in the example according to figure 3b, the side shielding 4 is retractable (indicated by the arrow). It can be lowered (moved into support 19), either manually or by a motor situated in support 6. To the contrary, the top shielding 5 is fixedly mounted to sphere 2.

Such a light shade 4 which can be slid up when needed is advantageous as the 360°-availability or usability of the sphere 2 resp. the retroreflector 1 has only to be restricted if direct ambient light is indeed present. If no protection is needed, e.g. no direct (low) sun light is present or if using the retroreflector 1 for surveying in buildings or tunnels or the like, the side shielding 4 can be retracted and the retroreflector 1 can be targeted with the surveying beam from any horizontal angle. Thus, the initial advantage of a spherical retroreflector, its (seemless) 360° or outright usability can be reestablished if the circumstances allow it.

Such an evaluation of circumstances is optionally done automatically. For example, the retroreflector 1 comprises a light detector for detection of direct ambient light. If no (or only weak) direct ambient light is detected, the side shielding 4 is automatically retracted. As another option, if it is detected that no surveying beam hits the sphere 2, the shade 4 is retracted, e.g. partly retraced by moving it up such that it only covers 25% or 40% of the upper half of the sphere 2. The detection if surveying light hits sphere 2 or not is e.g. done by the surveying instrument, e.g. if no retroreflected beam is detected the surveying instrument wirelessly orders the retroreflector 1 to open side shielding 4, for instance horizontally as shown in figure 3b or vertically (retraction by contraction).

Instead or in addition to shielding retracting, i.e. altering the size of the open window, shielding 4 or the complete shielding 5 can optionally be rotated around the sphere 2, e.g. about north-south-axis 18, either manually or automatically as described above. Thus, not or not only the size of the window open to impinging light is altered, but its orientation. This is further explained with respect to following figures 4a and 4b.

Figures 4a and 4b show another example of a light shielding. The light shielding is embodied a sphere-like hollow structure 3a, in the example with a size a little more than a half-sphere. The shielding 3a has a diameter comparable to the diameter of the retroreflective sphere 2 such that it jackets at least one north-south hemisphere of the retroreflective sphere 2. Thus, the shielding 3a shields the back side of sphere 2 as well as the main part of its left and right side and top and bottom.

The size or circumference, particularly its extension in the equatorial plane of sphere 2, can be chosen dependent on the environmental conditions. As another option, as shown in the figures, the shielding 3a is designed such that it is freely rotatable about the north-south-axis 18, indicated by the arrow in figure 4a. Thus, for example a 180°-rotation about this vertical axis 18 can be effected as shown from figure 4a to figure 4b, either manually or motorized (automatically).

In addition to such a rotation about vertical axis 18, the shielding 3a is optionally rotatable about the horizontal axis resp. (nearly) completely rotatable around sphere 2 in all directions. Thus, any desired orientation of the shielding 3a and thus the "field of view" of sphere 2 can be set. A vertical orientation (as shown in figures 4a,b) can optionally be automatically effected using gravity, which can be helpful for surveying with pole 19 not oriented vertical (surveying poles 19 with determination of its orientation are known in the art). Thus, shielding 3a automatically mainly acts as a side shielding no matter in which orientation the reflector 1 is held as it remains oriented as shown in the figures even if pole 19 is not vertically positioned.

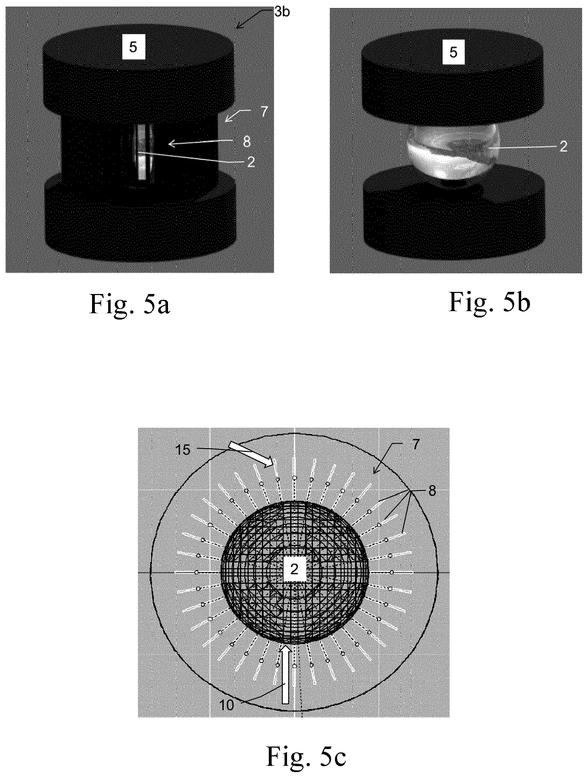

Figures 5a and 5c show another example of retroreflector 1 with an ambient light shielding 3. Figure 5b is a retroreflector without such a light shield for comparison.

Figure 5a shows a 3D-view of a retroreflector 1 with a light shielding. The shielding 3b comprises a top shade 5 and a side shielding 7. The side shielding 7 comprises a plurality of fins 8, arranged successively around sphere 2 perpendicular to its equatorial plane and spaced equally to each other as a cylinder around the sphere. The visible area of sphere 2 is reduced to a small area in the center, whereby the shielding 7 is designed such that this area corresponds to the cross-section of the retroreflection of the surveying beam. For comparison and better conception, figures 5b illustrates the "naked" sphere 2 without the side shielding 7.

The ring 7 of radial fins 8 limits the angular acceptance range of incoming light beams and thus shields from direct ambient light. In this way the structure acts like a kind of bended jalousie around the sphere. This is further illustrated with figure 5c which is a cross-sectional view of retroreflector 1 in the equatorial plane. In the middle, there is sphere 2 with the series of discrete fins 8 around.

Figure 5c illustrates that an incoming surveying beam 10, which impinges at least roughly radially or perpendicular to the sphere's surface is not hindered and can enter the sphere 2 and be retroreflected subsequently. To the contrary, ambient light beam 15 impinging with low angle as indicated in figure 5c is blocked by one of the fins 8 and does not penetrate onto or into sphere 2.

As an in principle similar alternative to such fins, a shielding with a structure for limiting the angular acceptance range is embodied as holes distributed over the sphere 2 and pointing towards the centre of the sphere 2 whereby the ratio of diameter and length of the holes define the acceptance angle. For example, the structure is embodied as a shielding shell with holes in it whereby the relation between diameter and shell thickness gives the acceptance angle of the sphere. This provides the advantage that elevation and azimuth angles beyond a given range are blocked.

An advantage of such shielding with fins or holes around the sphere 2 is that the shielding effect is the same regardless of the horizontal orientation of sphere 2 (note the symmetry as best viewed in figure 5c). Said otherwise, the shielding 3b is rotation invariant with respect to the vertical or north-south axis. Thus, there is no need for an operator to mind or adjust the yaw angle when the retroreflector 1 is positioned at a target point to be surveyed.

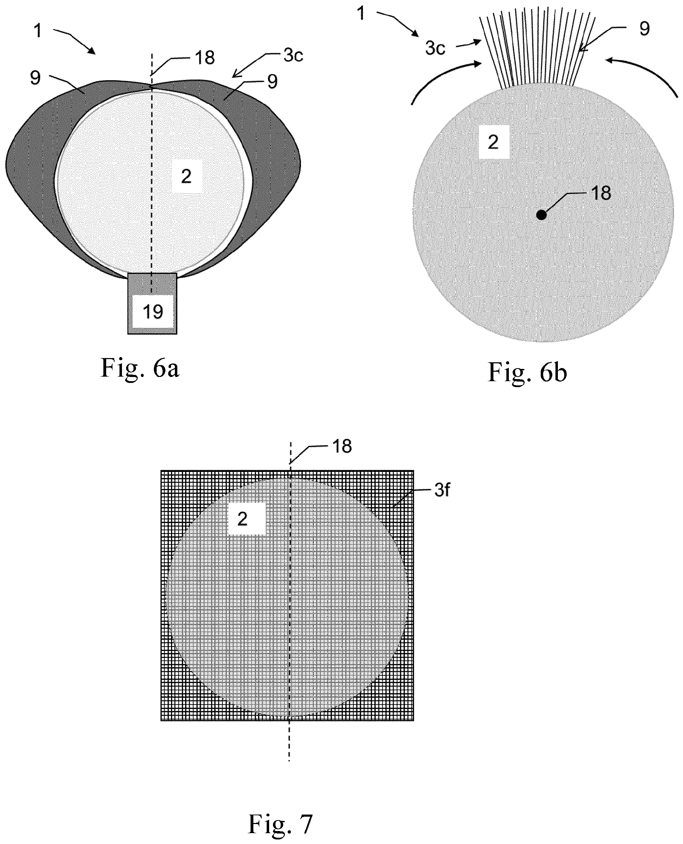

Figures 6a and 6b illustrate another embodiment of a retroreflector 1 with a shielding 3c limiting the angular acceptance range.

Figure 6a is a simplified side view, showing sphere 2 mounted on some sort of support 19. The sphere 2 is 360° in the equatorial plane surrounded by radial fins 9 whereby in the figure for better illustration only two fins 9 on each side are depicted. In contrast to the example according to figures 5a and 5c, the fins 9 run (nearly) completely from the north "pole" to the south "pole" along the lines of longitude. There is no separate top shielding and side shielding as in the example according to figures 5a and 5c but the fins 9 serve both as top shielding and side shielding.

Figure 6b illustrates in a simplified top view a further development of the embodiment according to figure 6a. The fins 9 are only adumbrated, not drawn completely around the sphere 2 in north-south direction. Shown is that the shielding 3c is retractable in that it can be folded together (indicated by the arrows). Said otherwise, the fins 9 can be slided about the horizontal axis 18 so that only a certain part of sphere 2 is covered, e.g. only half of the sphere 2 or only some minor rest at a back side as shown in figure 6b.

Such a shielding 3c retractable by movable fins 9 can generally be used to increase or decrease the effective size of shielding 3c to provide the advantages mentioned above with respect to figures 3a-4b, that is also in an embodiment such as shown in figure 5a or 5c. In addition, a variable or modifiable shielding structure 3c can be used to alter the angular acceptance range of the shielding 3, e.g. by changing the distance between some or all fins 9 or changing their positioning angle (e.g. slightly tilting them towards the sphere's surface).

Figure 7 depicts an alternative to the embodiments shown in figures 5a-6b with discrete fins 8, 9. In the example, a shielding structure 3f limiting the angular acceptance range is embodied as a structured film, foil, or thin sheet with a forming die, lying around sphere 2. Such a film 3f is for example arranged as a hollow cylinder with its axis coaxial to the north-south axis 18 of sphere 2, as shown in figure 7.

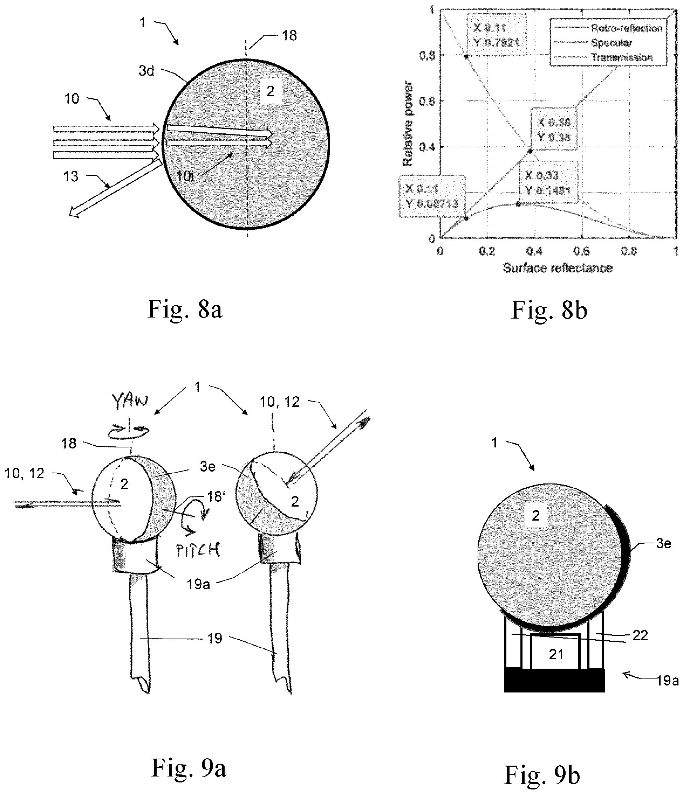

Figures 8a and 8b illustrate another example of a shielding against direct ambient light.

As shown in side-view figure 7a, the exemplary shielding is embodied as a reflective coating 3d on sphere 2. The coating 3d covers in the figure 7a the complete sphere 2, however, as an alternative the coating 3d functions only as a side shielding and extends only about the equator of sphere 2 e.g. half the diameter to north and south pole or asymmetrically up to 70° latitude to north and 45° latitude south. Such a coating is as another option not applied to the surface of the sphere 2 but to the inner surface of a hollow shielding structure such as shielding 3a shown in figure 4a.

Or as another alternative, the coating 3d has a reflectivity of (substantially) 100% and accordingly covers only one hemisphere (the "back" hemisphere) or part of it (see also figures 8a, 8b). Thus, such a shielding 3d, for example embodied as a metal coating (e.g. aluminium, copper) blocks all light from "behind" sphere 2.

However, as said and indicated in the example, the coating 3d preferably runs about the whole surface of the sphere 2 (which has the advantage that the orientation of the sphere 2 towards the geodetic instrument is of no importance which facilitates handling by an operator or enables targeting of retroreflector 1 from any direction) and has reflectivity in between 25% and 45%, for example 33%. Thus, as schematically indicated, by this "semi"-reflective coating part of incoming surveying beam 13 is reflected at the surface (light arrow 13) which means a higher loss by specular reflection than without coating 3d but the part of surveying light 10i which has entered sphere 2 and is reflected at its back side is increased compared to a "naked" sphere as shown e.g. in figure 1a, resulting in the end a higher yield and a higher SNR as more ambient direct light is blocked than without shielding 3d.

Figure 8b shows that best margin is obtained for a reflectivity of coating 3d of 33%. Said otherwise, maximum measurement signal strength is obtained at surface reflectance R=33% at which the retro-reflection is 70% stronger and a sun focus spot (transmission of direct ambient light) is reduced by 43% for a total of 3x better signal to disturbance ratio. At R = 38%, the specular and transmission coefficients are equal, so an ideal surface reflectance of coating 3d could be in the range 33% - 38%. Such a partly reflective shielding 3d is beneficial in that it increases the retro-reflection strength and at the same time reduces the transmitted ambient light.

Figures 9a,b illustrate an embodiment of a retroreflector 1 wherein the sphere 2 has a 100% reflective coating 3e as shielding. Due to the reflective coating, incoming surveying light 10 can enter sphere 2 unhindered by the shielding and is reflected at its back side with a higher degree compared to a "naked" sphere as beam 12 whereby ambient light from the back is blocked. The shielding 3e, e.g. a metal coating, is fixedly attached to sphere 2.

The sphere 2 itself is mounted to a pole 19. In the example, the sphere 2 is mounted at an interface 19a of pole 19 in such a way, that it is rotatable about two axes. That is, yaw and pitch angle of sphere 2 can be changed as is illustrated by the two different poses in figure 8a. Preferably, the sphere 2 can be rotated by a drive unit, e.g. integrated in interface 19a, for instance a piezoelectric drive as described with respect to figure 9b.

Figure 9b is a cross sectional view of retroreflector 1 with sphere 2 and ferromagnetic metal coating 3e. The sphere 2 is mounted on pole interface 19a. The interface 19a comprises a piezoelectric cylinder 22 with three zones of electrodes (not shown) whereby the sphere 2 lies with its coating 3e on the cylinder 22 with friction pads in between them (not depicted) . Due to the presence of a permanent magnet 21 in the middle, by accordingly controlling the electrodes, the sphere 2 can be rotated -as shown in figure 9a- by force exertion onto ferromagnetic coating 3e attached to sphere 2.

As an alternative drive (not shown), the retroreflector comprises a spherical ultrasonic motor. Such an exemplary spherical ultrasonic motor comprises an actuator driven by mechanical vibration in an ultrasonic field. The ultrasonic motor comprises a rotor and a stator, and piezoelectric elements are attached to a metal elastic body in the stator. According to the driving principle of the ultrasonic motor, it can be driven by the contact between the stator vibration surface and the part of the rotor, so rotational motion can be realized by simple mechanism.

As an alternative to said coatings, the shielding comprises as a filtering coating. Preferably, the shielding comprises a band-pass filter centered at the wavelength of the surveying light. For example, the shielding is embodied as layer of red "paint" or foil on the surface of sphere 2.

A skilled person is aware of the fact that details, which are here shown and explained with respect to different embodiments, can also be combined in other permutations in the sense of the invention if not indicated otherwise.

## Claims

1. Surveying spherical retroreflector (1) for retroreflection of incoming surveying light (10), the retroreflector (1) comprising a transparent, retroreflective sphere (2, 2') with a defined equatorial plane, and the retroreflector (1) further comprising a light shielding (3, 3a-3f) designed as shielding of the sphere (2, 2') against direct ambient irradiation (15), in particular solar irradiation.

2. Surveying spherical retroreflector (1) according to claim 1,
**characterized in that**
the shielding (3, 3a-3f) comprises a side shielding (4, 7), designed as shielding against direct low elevation ambient irradiation (15), in particular against ambient light beams impinging with an incidence angle of maximal 60° with respect to the equatorial plane.

3. Surveying spherical retroreflector (1) according to claim 2,
**characterized in that**
the side shielding (4, 7)
• extends 360° around the north-south-axis (18) of the sphere (2, 2') or
• is embodied as a hollow structure (4), in particular half-cylinder, running substantially around a north-to-south hemisphere of the sphere (2, 2').

4. Surveying spherical retroreflector (1) according to any of claims 1 to 3,
**characterized in that**
at least part of the shielding (3, 3a-3f) is
• at least partly retractable and/or
• rotatable about at least one axis (18) relative to the sphere (2, 2'), in particular 360° about the north-south-axis (18) of the sphere (2, 2'), or
• fixed relative to the sphere (2, 2') and the sphere (2, 2') is rotatable about at least one axis (18).

5. Surveying spherical retroreflector (1) according to claim 4,
**characterized in that**
wherein
• the retraction and/or rotation is effected automatically, in particular dependent on a detection
∘ of direct ambient light (15) and/or
∘ of the surveying light (10), and/or
• in an embodiment comprising a side shielding (4, 7) according to claim 2 the side shielding (4, 7) is fully retractable and/or freely rotatable 360° around the north-south-axis (18) of the sphere (2, 2').

6. Surveying spherical retroreflector (1) according to any of claims 1 to 5,
**characterized in that**
the shielding (3, 3a-3f) is rotation invariant with regard to an orientation of the sphere (2, 2') with respect to at least one axis of rotation (18), in particular
• with respect to a vertical axis (18) or
• with respect to all three axis of rotation.

7. Surveying spherical retroreflector (1) according to any of the preceding claims,
**characterized in that**
the shielding (3, 3a-3f), in particular the side shielding (7) according to claim 2, comprises a structure (3b, 3c, 3f) limiting the angular acceptance range of impinging light beams (10, 15), in particular wherein the structure (3b, 3c, 3f) is modifiable in such a way that the angular acceptance range can be varied.

8. Surveying spherical retroreflector (1) according to claim 7,
**characterized in that**
the structure (3b, 3c, 3f) comprises a plurality of discrete fins (8, 9) running circumferentially around the sphere (2, 2') and perpendicular to the equatorial plane of the sphere (2, 2').

9. Surveying spherical retroreflector (1) according to claim 7 or 8,
**characterized in that**
the structure (3f) comprises a structured film, in particular arranged as a hollow cylinder coaxial to the north-south-axis of the sphere (2, 2').

10. Surveying spherical retroreflector (1) according to any one of claims 7 to 9,
**characterized in that**
the structure comprises a plurality of holes running circumferentially around the sphere (2, 2'), wherein
• the holes are pointing towards the center of the sphere (2, 2') and
• the relation of hole diameter to the hole length defines the acceptance angle.

11. Surveying spherical retroreflector (1) according to any of the preceding claims,
**characterized in that**
the shielding (3, 3a-3f), in particular the side shielding according to claim 2, comprises a reflective coating (3d, 3e).

12. Surveying spherical retroreflector (1) according to claim 11,
**characterized in that**
the reflective coating (3d) extends 360° around the north-south-axis of the sphere (2, 2') and has a reflectivity in between 25% and 45%, in particular in between 33% and 38%, specifically a reflectivity of 33%.

13. Surveying spherical retroreflector (1) according to claim 11,
**characterized in that**
the reflective coating (3e) extends 180° at most around the north-south-axis (18) of the sphere (2, 2'), in particular covers a north-to-south hemisphere, and has a near-total-reflectivity.

14. Surveying spherical retroreflector (1) according to any of the preceding claims,
**characterized in that**
the shielding (3, 3a-3f), in particular the side shielding according to claim 2, comprises a band-pass light filter coating adapted to the wavelength of the surveying light (10, 12, 13).

15. Surveying spherical retroreflector (1) according to any of the preceding claims,
**characterized in that**
the sphere (2, 2') has
• a diameter of at least 17mm, particularly at least 30mm, specifically 34mm, and/or
• a refractive index adapted to the surveying light and/or
• a varying refractive index, in particular
o a stepped refractive index or
o a gradient refractive index, or
• a refractive index of 2.

## Patentansprüche

1. Kugelförmiger Vermessungsretroreflektor (1) zur Retroreflexion eingehenden Vermessungslichts (10), wobei der Retroreflektor (1) eine transparente, retroreflektierende Kugel (2, 2') mit einer definierten Äquatorebene umfasst und der Retroreflektor (1) ferner eine Lichtabschirmung (3, 3a-3f) umfasst, die als Abschirmung der Kugel (2, 2') gegen direkte Umgebungsstrahlung (15), insbesondere Sonnenstrahlung, ausgestaltet ist.

2. Kugelförmiger Vermessungsretroreflektor (1) nach Anspruch 1,
**dadurch gekennzeichnet, dass**
die Abschirmung (3, 3a-3f) eine Seitenabschirmung (4, 7) umfasst, die als Abschirmung gegen direkte Umgebungsstrahlung (15) aus niedriger Höhe, insbesondere gegen Umgebungslichtstrahlen, die mit einem Einfallswinkel von maximal 60° gegenüber der Äquatorebene auftreffen, ausgestaltet ist.

3. Kugelförmiger Vermessungsretroreflektor (1) nach Anspruch 2,
**dadurch gekennzeichnet, dass**
die Seitenabschirmung (4, 7)
• sich um 360° um die Nord-Süd-Achse (18) der Kugel (2, 2') erstreckt oder
• als eine Hohlstruktur (4), insbesondere ein Halbzylinder, ausgeführt ist, der im Wesentlichen um eine Nord-Süd-Halbkugel der Kugel (2, 2') verläuft.

4. Kugelförmiger Vermessungsretroreflektor (1) nach einem der Ansprüche 1 bis 3,
**dadurch gekennzeichnet, dass**
mindestens ein Teil der Abschirmung (3, 3a-3f)
• mindestens teilweise einziehbar ist und/oder
• um mindestens eine Achse (18) in Bezug auf die Kugel (2, 2'), insbesondere um 360° um die Nord-Süd-Achse (18) der Kugel (2, 2'), drehbar ist oder
• in Bezug auf die Kugel (2, 2') fixiert ist und die Kugel (2, 2') um mindestens eine Achse (18) drehbar ist.

5. Kugelförmiger Vermessungsretroreflektor (1) nach Anspruch 4,
**dadurch gekennzeichnet, dass**
• die Einziehung und/oder Drehung automatisch bewirkt wird, insbesondere in Abhängigkeit von einer Erfassung
∘ direkten Umgebungslichts (15) und/oder
∘ des Vermessungslichts (10) und/oder
• in einer Ausführung, die eine Seitenabschirmung (4, 7) nach Anspruch 2 umfasst, die Seitenabschirmung (4, 7) völlig einziehbar und/oder um 360° frei um die Nord-Süd-Achse (18) der Kugel (2, 2') drehbar ist.

6. Kugelförmiger Vermessungsretroreflektor (1) nach einem der Ansprüche 1 bis 5,
**dadurch gekennzeichnet, dass**
die Abschirmung (3, 3a-3f) hinsichtlich einer Ausrichtung der Kugel (2, 2') drehungsinvariant gegenüber mindestens einer Drehungsachse (18), insbesondere
• gegenüber einer vertikalen Achse (18) oder
• gegenüber allen drei Drehungsachsen, ist.

7. Kugelförmiger Vermessungsretroreflektor (1) nach einem der vorhergehenden Ansprüche,
**dadurch gekennzeichnet, dass**
die Abschirmung (3, 3a-3f), insbesondere die Seitenabschirmung (7) nach Anspruch 2, eine Struktur (3b, 3c, 3f) umfasst, die den Akzeptanzwinkelbereich eingehender Lichtstrahlen (10, 15) einschränkt, insbesondere wobei die Struktur (3b, 3c, 3f) in einer solchen Weise änderbar ist, dass der Akzeptanzwinkelbereich variiert werden kann.

8. Kugelförmiger Vermessungsretroreflektor (1) nach Anspruch 7,
**dadurch gekennzeichnet, dass**
die Struktur (3b, 3c, 3f) eine Vielzahl separater Rippen (8, 9) umfasst, die in Umfangsrichtung um die Kugel (2, 2') und senkrecht zu der Äquatorebene der Kugel (2, 2') verläuft.

9. Kugelförmiger Vermessungsretroreflektor (1) nach Anspruch 7 oder 8,
**dadurch gekennzeichnet, dass**
die Struktur (3f) eine strukturierte Folie umfasst, die insbesondere als ein Hohlzylinder koaxial zu der Nord-Süd-Achse der Kugel (2, 2') angeordnet ist.

10. Kugelförmiger Vermessungsretroreflektor (1) nach einem der Ansprüche 7 bis 9,
**dadurch gekennzeichnet, dass**
die Struktur eine Vielzahl von Löchern umfasst, die in Umfangsrichtung um die Kugel (2, 2') verläuft, wobei
• die Löcher in Richtung der Mitte der Kugel (2, 2') zeigen und
• die Beziehung von Lochdurchmesser zur Lochlänge den Akzeptanzwinkel definiert.

11. Kugelförmiger Vermessungsretroreflektor (1) nach einem der vorhergehenden Ansprüche,
**dadurch gekennzeichnet, dass**
die Abschirmung (3, 3a-3f), insbesondere die Seitenabschirmung nach Anspruch 2, eine reflektierende Beschichtung (3d, 3e) umfasst.

12. Kugelförmiger Vermessungsretroreflektor (1) nach Anspruch 11,
**dadurch gekennzeichnet, dass**
sich die reflektierende Beschichtung (3d) um 360° um die Nord-Süd-Achse der Kugel (2, 2') erstreckt und eine Reflektivität zwischen 25 % und 45 %, insbesondere zwischen 33 % und 38 %, spezifisch eine Reflektivität von 33 % aufweist.

13. Kugelförmiger Vermessungsretroreflektor (1) nach Anspruch 11,
**dadurch gekennzeichnet, dass**
sich die reflektierende Beschichtung (3e) um höchstens 180° um die Nord-Süd-Achse (18) der Kugel (2, 2') erstreckt, insbesondere eine Nord-Süd-Halbkugel bedeckt und eine nahezu vollständige Reflektivität aufweist.

14. Kugelförmiger Vermessungsretroreflektor (1) nach einem der vorhergehenden Ansprüche,
**dadurch gekennzeichnet, dass**
die Abschirmung (3, 3a-3f), insbesondere die Seitenabschirmung nach Anspruch 2, eine Bandpasslichtfilterbeschichtung umfasst, die an die Wellenlänge des Vermessungslichts (10, 12, 13) angepasst ist.

15. Kugelförmiger Vermessungsretroreflektor (1) nach einem der vorhergehenden Ansprüche,
**dadurch gekennzeichnet, dass**
die Kugel (2, 2') Folgendes aufweist:
• einen Durchmesser von mindestens 17 mm, insbesondere mindestens 30 mm, spezifisch 34 mm und/oder
• einen Brechungsindex, der an das Vermessungslicht angepasst ist, und/oder
• einen variierenden Brechungsindex, insbesondere
∘ einen gestuften Brechungsindex oder
∘ einen Gradientenbrechungsindex oder
• einen Brechungsindex von 2.

## Revendications

1. Dispositif rétroréfléchissant sphérique d'arpentage (1) destiné à rétroréfléchir une lumière d'arpentage entrante (10), ledit dispositif rétroréfléchissant (1) comprenant une sphère rétroréfléchissante transparente (2, 2') comportant un plan équatorial défini, et ledit dispositif rétroréfléchissant (1) comprenant en outre un organe occultant (3, 3a-3f) conçu pour occulter, pour la sphère (2, 2'), le rayonnement ambiant direct (15), notamment le rayonnement solaire.

2. Dispositif rétroréfléchissant sphérique d'arpentage (1) selon la revendication 1,
**caractérisé en ce que**
l'organe occultant (3, 3a-3f) comprend un organe occultant latéral (4, 7), conçu pour occulter le rayonnement ambiant direct sous incidence faible (15), notamment des faisceaux lumineux ambiants projetés avec un angle d'incidence maximal de 60° par rapport au plan équatorial.

3. Dispositif rétroréfléchissant sphérique d'arpentage (1) selon la revendication 2,
**caractérisé en ce que**
l'organe occultant latéral (4, 7)
• s'étend à 360° autour de l'axe nord-sud (18) de la sphère (2, 2') ou
• est constitué d'une structure creuse (4), notamment un demi-cylindre, disposée essentiellement autour d'un hémisphère de la sphère (2, 2') allant du nord au sud.

4. Dispositif rétroréfléchissant sphérique d'arpentage (1) selon l'une quelconque des revendications 1 à 3,
**caractérisé en ce que**
au moins une partie de l'organe occultant (3, 3a-3f)
• est rétractable au moins en partie et/ou
• peut tourner sur au moins un axe (18) par rapport à la sphère (2, 2'), notamment à 360° sur l'axe nord-sud (18) de la sphère (2, 2'), ou
• est fixe par rapport à la sphère (2, 2') et ladite sphère (2, 2') peut tourner sur au moins un axe (18).

5. Dispositif rétroréfléchissant sphérique d'arpentage (1) selon la revendication 4,
**caractérisé en ce que**
• la rétractation et/ou la rotation sont effectuées automatiquement, notamment en cas de détection :
∘ d'une lumière ambiante directe (15) et/ou
∘ de la lumière d'arpentage (10), et/ou
• dans une réalisation comprenant un organe occultant latéral (4, 7) selon la revendication 2, ledit occultant latéral (4, 7) est totalement rétractable et/ou peut librement tourner à 360° sur l'axe nord-sud (18) de la sphère (2, 2').

6. Dispositif rétroréfléchissant sphérique d'arpentage (1) selon l'une quelconque des revendications 1 à 5,
**caractérisé en ce que**
l'organe occultant (3, 3a-3f) ne suit pas la rotation de la sphère (2, 2') sur au moins un axe de rotation (18), notamment :
• sur un axe vertical (18) ou
• sur les trois axes de rotation.

7. Dispositif rétroréfléchissant sphérique d'arpentage (1) selon une quelconque des revendications précédentes,
**caractérisé en ce que**
l'organe occultant (3, 3a-3f), notamment l'organe occultant latéral (7) selon la revendication 2, comprend une structure (3b, 3c, 3f) qui limite la plage angulaire dans laquelle sont acceptés les faisceaux lumineux projetés (10, 15), la structure (3b, 3c, 3f) étant notamment modifiable de manière à permettre la modification de ladite plage angulaire d'acceptation.

8. Dispositif rétroréfléchissant sphérique d'arpentage (1) selon la revendication 7,
**caractérisé en ce que**
la structure (3b, 3c, 3f) comprend une pluralité d'ailettes distinctes (8, 9) disposées suivant la circonférence de la sphère (2, 2') et perpendiculaires au plan équatorial de la sphère (2, 2').

9. Dispositif rétroréfléchissant sphérique d'arpentage (1) selon la revendication 7 ou 8,
**caractérisé en ce que**
la structure (3f) comprend un film structuré, notamment agencé sous la forme d'un cylindre creux parallèle à l'axe nord-sud de la sphère (2, 2').

10. Dispositif rétroréfléchissant sphérique d'arpentage (1) selon l'une quelconque des revendications 7 à 9,
**caractérisé en ce que**
la structure comprend une pluralité de trous disposés suivant la circonférence de la sphère (2, 2'),
• lesdits trous étant orientés vers le centre de la sphère (2, 2') et
• le rapport entre le diamètre des trous et la longueur des trous définit l'angle d'acceptation.

11. Dispositif rétroréfléchissant sphérique d'arpentage (1) selon une quelconque des revendications précédentes,
**caractérisé en ce que**
l'organe occultant (3, 3a-3f), notamment l'organe occultant latéral selon la revendication 2, possède un revêtement réfléchissant (3d, 3e).

12. Dispositif rétroréfléchissant sphérique d'arpentage (1) selon la revendication 11,
**caractérisé en ce que**
le revêtement réfléchissant (3d) s'étend à 360° autour de l'axe nord-sud de la sphère (2, 2') et présente une réflectivité comprise entre 25 % et 45 %, notamment entre 33 % et 38 %, spécifiquement une réflectivité de 33 %.

13. Dispositif rétroréfléchissant sphérique d'arpentage (1) selon la revendication 11,
**caractérisé en ce que**
le revêtement réfléchissant (3e) s'étend au maximum à 180° autour de l'axe nord-sud (18) de la sphère (2, 2'), notamment couvre un hémisphère allant du nord au sud, et présente une réflectivité quasi totale.

14. Dispositif rétroréfléchissant sphérique d'arpentage (1) selon une quelconque des revendications précédentes,
**caractérisé en ce que**
l'organe occultant (3, 3a-3f), notamment l'organe occultant latéral selon la revendication 2, possède un revêtement agissant comme un filtre lumineux à bande passante adapté à la longueur d'onde de la lumière d'arpentage (10, 12, 13).

15. Dispositif rétroréfléchissant sphérique d'arpentage (1) selon une quelconque des revendications précédentes,
**caractérisé en ce que**
la sphère (2, 2') présente :
• un diamètre d'au moins 17 mm, notamment au moins 30 mm, spécifiquement 34 mm, et/ou
• un indice de réfraction adapté à la lumière d'arpentage et/ou
• un indice de réfraction variable, notamment :
∘ un indice de réfraction échelonné ou
∘ un gradient d'indice de réfraction, ou
• un indice de réfraction de 2.
